# EUROPEAN PATENT APPLICATION

(11) **EP 1 825 758 A2**
(43) Date of publication of application: **29.08.2007**
(21) Application number: 07103128.0
(22) Date of filing: 27.02.2007
(51) Int. Cl.: A23C 9/16, A23C 19/02

(54) **Intermediate dairy mixture and a method of manufacture thereof**

(30) Priority: 28.02.2006 US 276422
(71) Applicant: KRAFT FOODS HOLDINGS, INC., Northfield, Illinois 60093 (US)
(72) Inventor: Gramza, Erin Marie, Gurnee, IL 60031 (US); Loza, Oscar, Chicago, IL 60647 (US); Bahrani, Rashad A., Vernon Hills, IL 60061 (US); Reinhart, Brian Michael, Streamwood, IL 60107 (US); Galloway, Grant Ian, Deerfield, IL 60015 (US); Meibach, Ronald L., Deerfield, IL 60015 (US); Metzger, Virgil, Vernon Hills, IL 60061 (US)
(74) Representative: Smaggasgale, Gillian Helen

(57) **Abstract**

An intermediate dairy mixture and methods of manufacture are disclosed. The intermediate dairy mixture may be used as a base to form a dairy product, such as processed cheese, cream cheese, yogurt, and the like. The intermediate dairy mixture includes a protein powder having greater than 40 percent protein, a dairy powder, water, and salt such that the intermediate dairy mixture is non-dusting and friable and has a water activity less than about 0.87. The dairy powder is added in an amount effective to minimize agglomeration of the protein powder during subsequent hydration such that a substantially smooth dairy product is formed.

## Description

### FIELD OF THE INVENTION

The present invention relates to processes for producing dairy mixtures, and in particular, processes for producing an intermediate dairy mixture that is a friable, non-dusting solid cheese base and that is microbiologically stable without refrigeration for extended periods. The present invention also relates to the friable, non-dusting solid cheese bases produced by such processes. The intermediate dairy mixtures of this invention are especially suitable for use in preparing processed cheeses and other cheese products.

### BACKGROUND OF THE INVENTION

Process cheese is a dairy food product having a smooth, creamy texture and a slight firmness that is desirable to cheese consumers. It is conventionally prepared by grinding and heating one or more varieties of natural cheeses to form a process cheese base. The resultant cheese base is then blended with other dairy products to produce a homogeneous, pumpable fluid cheese material that may be formed into blocks, sheets, slices, or other desired forms. Depending on the particular cheese to be produced, the cheese base may be blended with various amounts of non-fat dairy milk, whey solids, emulsifying agents, or other ingredients to form the processed cheese.

The use of blended natural cheeses to prepare process cheese often constrains the manufacturing process because natural cheese has a limited shelf life or otherwise requires expensive, refrigerated storage. For instance, once natural cheese is received in a cheese manufacturing plant for blending into a process cheese, it generally must be used within a fixed timeframe or such raw material may be wasted. Such limitations restrict the flexibility of modern cheese manufacturing equipment and facilities.

Attempts have been made to provide a process cheese base with edible powders wherein the resultant cheese base may be used as a substitute for some or all of the natural cheese normally used in the production of process cheese. For instance, U.S. Patent No. 6,773,740 (which is owned by the same assignee as the present application and which is incorporated by reference) describes a method for preparing a process cheese base for use in preparing process cheese. That method comprised (1) mixing one or more concentrated powders derived from milk with sodium chloride, milk fat, water, and, optionally, an edible acid and a preservative for a period of time sufficient to produce a mixed product, wherein the concentrated powders are present in an amount ranging from about 25 to about 60 percent, wherein the sodium chloride is present in an amount ranging from about 0.5 to about 4.0 percent, wherein the milk fat is present in an amount ranging from about 9 to about 38 percent, wherein the edible acid is present in an amount ranging from 0 to about 2.0 percent, wherein the preservative is present in an amount ranging from 0 to about 0.2 percent, wherein the water is present at a level sufficient to form the cheese product, wherein percentages are based on the total weight of the cheese product, and wherein the milk fat during mixing is at a temperature of about 80 to about 140°F; and (2) cooling the mixed product for a time and at a temperature which is sufficient to allow the mixed product to form a solid matrix, wherein the solid matrix is the cheese product; wherein the cheese product has the texture and consistency of fresh cheese.

Although this method represents a significant improvement over the prior art, it still has some limitations and disadvantages. Thus, for example, the mixing is carried out at elevated temperatures and formation of the solid matrix requires cooling. For use in process cheese, the solid matrix, which is "hard and difficult to cut," must be ground. Additionally, the solid matrix of U.S. Patent No. 6,773,740 is not as stable to microbiological growth as is desired. Thus, it must be used immediately or stored under refrigeration conditions. Perhaps more importantly, the equipment used to prepare the solid matrix must be shut down to be cleaned and sanitized on essentially a daily basis. Such daily shutdowns for cleaning and sanitizing increase expenses, promote inefficiencies in the manufacturing process, and constrain the planning and scheduling of process equipment that may be in high demand to produce product.

It would be desirable to provide a process that would avoid or eliminate these shortcomings. The present invention provides such an improved process by producing a friable, non-dusting solid cheese base that is microbiologically stable without refrigeration for extended periods. This cheese base can be used as a substitute for natural cheese in the manufacture of process cheese or other dairy products. The production of the cheese base does not require cooling or additional processing (i.e., grinding) for use in conventional cheese manufacturing equipment. Moreover, an essentially continuous process can be carried for the production of the cheese base and process cheese therefrom.

### SUMMARY OF THE INVENTION

A cheese base or an intermediate dairy mixture is provided that is suitable for forming a dairy product, such as processed cheese, cream cheese, yogurt and the like, upon subsequent hydration and cooking. The intermediate dairy mixtures have a composition that minimizes agglomeration of protein during the subsequent hydration and formation of the dairy product; therefore, the resultant dairy products have a smooth texture without any visible specks or detectable grittiness. In a preferred embodiment, the dairy mixtures may be used as a partial or complete replacement for natural cheese in the manufacture of processed cheese. In a preferred embodiment, the dairy mixtures are prepared and then used directly in the preparation of process cheese in an essentially continuous process.

The intermediate dairy mixtures also include an amount of water sufficient to render the mixtures non-dusting and friable, which permit ease of handing and elimination of additional grinding steps prior to further processing. As further described below, even though the intermediate dairy mixtures include water, the mixtures are also stable from microbiological growth for greater than 5 days. Such stability permits non-refrigerated storage and extended manufacturing runs with less frequent shutdowns for equipment cleaning and sanitation.

In one form, the intermediate dairy mixture includes a protein powder (preferably milk protein concentrate) having greater than 40 percent protein blended with a dairy powder (preferably whey powder) having greater than about 70 percent lactose, in an amount effective to minimize agglomeration of the protein during subsequent hydration of the mixture.

The protein powder, dairy powder, water, and salt are combined and blended at ambient temperatures (preferably about 60 to about 75°F) to form the intermediate dairy mixture. Preferably, the ingredients are continuously blended in an extruder, but may also be mixed in a blending tank or other suitable mixer. If desired, the protein powder, the dairy powder, and salt may be first blended together to form a pre-blend to which the water may then be added to form the intermediate dairy mixture upon mixing. The amounts of the various ingredients are adjusted, as described herein, to provide a non-dusting and friable solid that is stable from microbiological growth at room temperature for greater than about 5 days and can be used to prepare a dairy product (e.g., process cheese) having a substantially smooth texture. Since the solid dairy mixture is friable, it can be used directly in a conventional process cheese manufacturing process without further processing steps (i.e., grinding the solid dairy mixture is not necessary).
Optionally, an amount of fat, such as a milk fat or vegetable fat, may be added to the intermediate dairy mixture. For instance, between 0 and about 40 percent fat may be added to the intermediate dairy mixture if desired.

The present invention provides a solid dairy mixture comprising: (1) about 5 to about 86 percent of a protein powder having greater than about 40 percent protein; (2) about 5 to about 86 percent of dairy powder having at least about 70 percent lactose; (3) about 5 to about 35 percent water; and (4) about 4 to about 20 percent salt, wherein the ratio of protein powder to dairy powder in the solid dairy mixture is in the range of about 17:1 to about 1:17, wherein the ratio of water to salt in the solid dairy mixture is less than about 6.2, wherein the solid dairy mixture has a water activity less than about 0.87, wherein the solid dairy mixture is non-dusting and friable; wherein the solid dairy mixture is stable from microbiological growth at room temperature for greater than about 5 days, and wherein the solid dairy mixture can be used to prepare a dairy product having a substantially smooth texture.

The present invention also provides a method for preparing a solid dairy mixture, the method comprising: (1) combining about 5 to about 86 percent of a protein powder having greater than about 40 percent protein, about 5 to about 86 percent of whey powder having at least about 70 percent lactose, about 5 to about 35 percent water, and 4 to about 20 percent salt at ambient temperatures to form a mixture; and (2) blending the mixture at ambient temperatures and for a time sufficient to form the solid dairy mixture; wherein the ratio of protein powder to whey powder in the solid dairy mixture is in the range of about 17:1 to about 1:17, wherein the ratio of water to salt in the solid dairy mixture is less than 6.2, wherein the solid dairy mixture has a water activity less than about 0.87, wherein the solid dairy mixture is non-dusting and friable; and wherein the solid dairy mixture can be used to prepare a dairy product having a substantially smooth texture.

This invention also provides a solid dairy mixture prepared by a method comprising: (1) combining about 5 to about 86 percent of a protein powder having greater than about 40 percent protein, about 5 to about 86 percent of dairy powder having at least about 70 percent lactose, about 5 to about 35 percent water, and 4 to about 20 percent salt at ambient temperatures to form a mixture; and (2) blending the mixture at ambient temperatures and for a time sufficient to form the solid dairy mixture; wherein the ratio of protein powder to dairy powder in the solid dairy mixture is in the range of about 17:1 to about 1:17; wherein the ratio of water to salt in the solid dairy mixture is less than 6.2, wherein the solid dairy mixture has a water activity less than about 0.87, wherein the solid dairy mixture is non-dusting and friable; and wherein the solid dairy mixture can be used to prepare a dairy product having a substantially smooth texture.

The non-dusting and friable solid dairy mixtures as described above may also be used to form a process cheese. Accordingly, the invention further provides a method of manufacturing a process cheese by hydrating the non-dusting and friable solid dairy mixture to form a hydrated dairy mixture; treating the hydrated dairy mixture with shear to form a fresh cheese; and blending emulsifiers with the fresh cheese at a time and temperature sufficient to obtain the process cheese.

### DESCRIPTION OF THE PREFERRED EMBODIMENTS

A intermediate dairy mixture is provided that is suitable as a base ingredient in the manufacture of a variety of dairy products such as process cheese, cream cheese, yogurt, and other dairy-based like products. In a preferred embodiment, the intermediate dairy mixture is a process cheese base, which may be used as a partial or complete replacement for natural cheese in process cheese manufacture.

The intermediate dairy mixtures described herein are non-dusting and friable. Such properties render the mixtures very easy to handle and transport. The friable characteristics also eliminate any additional grinding prior to further use because the dairy mixture is readily crumbled or broken without the use of additional mechanical grinding equipment. For purposes herein, friable means the intermediate dairy mixture is readily crumbled under low shear conditions and thus does not require the use of grinding, pulverizing, or other mechanical high shear equipment to break the intermediate dairy mixture into a crumb-like material for use in conventional process cheese manufacturing processes. Such properties are advantageous because the intermediate dairy mixtures permit flexibility in manufacturing and simplified material handling.

The intermediate dairy mixtures are also stable from microbiological growth for at least about 5 days at ambient temperatures. Thus, extended non-refrigerated storage is possible. Even with increased levels of water, the intermediate dairy mixtures have a composition that limits, and preferably inhibits, the growth of microbes, yeast, and mold for at least about 5 days at ambient temperatures. Such stability effectively eliminates the need for daily equipment cleanings for manufacturing lines using the intermediate dairy mixtures and thus allows for more continuously operation. The intermediate dairy mixtures of the present invention permit less frequent equipment cleanings (e.g., weekly or biweekly).

In one form, the intermediate dairy mixture includes a high protein powder, a dairy power, and salt with an amount of water to form a friable, non-dusting mixture. The amount of water and salt in the intermediate dairy mixture are adjusted to achieve a water activity less than or equal to about 0.87, and preferably less than or equal to 0.80. Such water activities provide stability from microbiological growth for at least about 5 days at ambient temperatures. Optionally, the intermediate dairy mixture may also include an amount of fat, such as a milk fat or a vegetable fat.

A wide variety of concentrated powders derived from milk may be employed as the high protein powder. For example, the high protein powder may be a concentrated dairy protein powder, such as non-fat dry milk (NFDM), milk protein powders (i.e., milk protein concentrates, milk protein isolates, casein powder, or caseinate powder), whey protein concentrate, whey protein, or mixtures thereof. Preferably, the high protein powder is a milk protein concentrate (MPC) having at least 40 percent crude protein (and preferably at least about 56 percent crude protein), which renders the intermediate dairy mixture suitable for use as a process cheese base or intermediate base useful in the manufacture of process cheese. Suitable milk protein powders are commercially available with crude protein amounts ranging from about 40 to about 85 percent from New Zealand Milk Products (New Zealand), Murray Goulburn (Australia), and other commercial suppliers.

When using such high protein powders in the manufacture of process cheese, proper hydration of the powders is important to achieve the desired smooth texture in the final product. It has been discovered that the use of a high protein powder or a combination of high protein powders by itself or themselves results in a final product that, upon subsequent hydration, is gritty or includes visible specks. While not wishing to be limited by theory, it is believed that such gritty texture is the result of uneven hydration of the protein powder during the subsequent processing steps.

The protein in high protein powders, such as MPC, is generally very hydroscopic and rapidly absorbs water in uneven proportions. Hydrating MPC alone, therefore, generally results in a mixture that forms case-hardened agglomerates, which include a hydrated protein shell formed around an unhydrated protein powder core. These case-hardened agglomerates are believed to be formed during hydration because the very hydroscopic protein powders rapidly absorb water such that some portions of the powder are quickly hydrated and other portions of the powder have insufficient water to hydrate properly. This uneven hydration permits the rapidly hydrated material to form a coating or shell around the poorly hydrated material. These agglomerates do not cook properly, and are undesired in the final product because they result in grittiness or visible specks.

The present invention avoids such agglomerates. To achieve a smooth consistency in the final product, it has been discovered that a blend of the high protein powder with sufficient amounts of the dairy powder improves the final product consistency and texture upon subsequent hydration of the intermediate dairy mixture. Although not wishing to be limited by theory, it appears that diluting the high protein powder with the dairy powder permits a more uniform hydration thereof, and consequently, minimizes the size of the case-hardened agglomerates, and preferably, prevents their formation altogether.

The dairy powder is blended into the intermediate dairy mixture in an amount sufficient to modify the hydration kinetics of the high protein powders upon subsequent hydration and cooking of the intermediate dairy mixture. That is, the dairy powder is added to the mixture in an amount that decreases the rate of hydration of the very hydroscopic high protein powders to ensure that the protein powders are hydrated in a generally consistent and more uniform rate.

In one form, the dairy powder derived from milk has high levels of sugars, such as high levels of lactose. Preferably, a dairy powder having greater than about 70 percent lactose, and most preferably, between 70 and 75 percent lactose is desired. For instance, whey powder (i.e., Krafen, Kraft Foods, Glenview, III) is a preferred form. While not wishing to be limited by theory, it is believed that effective amounts of whey powder modify the hydration kinetics of the dairy mixture by diluting the milk protein to such a level that, upon hydration, the MPC and whey powder compete for water. The rapid hydration of the very hydroscopic milk proteins is thus minimized and preferably avoided due to the competition for water. On the other hand, it is also believed that the lactose in the whey may react with the protein structures in the MPC such that agglomerates are reduced in size or preferably not formed at all.

Sufficient amounts of the preferred whey powder are needed to achieve the uniform hydration. For instance, insufficient whey powder does not adequately slow the hydration kinetics and a gritty consistency still results. Excess whey powder, on the other hand, may result in a less friable mixture that is undesirable because it may require further processing before use. It has been discovered, therefore, that a dairy mixture having a ratio of high protein powder to dairy powder ranging from about 17:1 to about 1:17, preferably about 8:1 to about 1:8, and more preferably from about 4:1 to about 1:4, is sufficient to provide the desired uniform hydration without the formation of agglomerates when using the intermediate dairy mixture as a base to form a process cheese.

As described above, the intermediate dairy mixture is also non-dusting and friable. To achieve such properties, an amount of water is blended with the high protein powder and the dairy powder. At a minimum, the added water is optimized at a level sufficient to form the blend into a non-dusting and friable mass, but also low enough to prevent the dairy mixture from solidifying into a solid mass or forming a liquid mass. For example, an amount of water added to the intermediate dairy mixture is from about 5 to about 35 percent, preferably about 10 to 35 percent, and most preferably, from about 25 to about 30 percent to form an intermediate dairy mixture having a total moisture (i.e., added water plus water in other ingredients) level from about 10 percent to about 35 percent. Below about 10 percent total water the intermediate dairy mixture may exhibit dusting and above about 35 percent total water the intermediate dairy mixture is generally not microbiological stable and/or forms a non-friable solid mass or a solution. By keeping the total water content below about 35 percent (and maintaining the desired water-salt ratio), undesired manufacturing steps prior to use in a processed cheese (e.g., grinding or similar high sheer operation) are avoided and suitable water activities for microbiological stability are obtained.

As discussed above, with the inclusion of about 5 to about 35 percent water, a salt component is added to the intermediate dairy mixture to stabilize the mixture from microbiological growth. Generally, about 4 to about 20 percent salt is added to the intermediate dairy mixture to control the water activity. Most preferably, between about 5 and about 7 percent salt is added to achieve the desired water activities. To maintain the microbiological stability of such dairy mixtures (i.e., minimize, and preferably, prevent microbiological growth), the water to salt ratio is maintained below about 6.2 and preferably in the range of about 3.9 to about 5.9. Additionally, the pH may be controlled (i.e., through additions of lactic acid or other suitable edible acids) and/or anti-mycotic agents (e.g., sorbic acid) can be incorporated to increase microbiological stability.

As noted, controlling the water activity also depends on balancing the amount of water and salt. The amount of water and salt added to the dairy mixture must be balanced to not only achieve the desired water activity, but also the non-dusting and friable characteristics. If desired, the salt may be added as a brine solution that includes the amount of salt and partial amounts of the desired water. In one form, for instance, it has been discovered that salt addition greater than or equal to about 4 percent combined with water less than or equal to about 35 percent in the intermediate dairy mixture is sufficient to achieve a water activity below 0.87 that renders the dairy mixture stable from microbiological growth and also forms a non-dusting and friable mass. In other words, a water to salt ratio of generally less than or equal to about 6.2, and preferably less than or equal to 5.0, provides good microbiological stability as well as other desired properties.

Optionally, a fat may be added to the intermediate dairy mixture. For example, between 0 and about 40 percent (preferably about 10 to about 40 percent) of a dairy fat or a vegetable fat may be added if desired. Examples of suitable fats include a wide variety of milk fats, such as cream, dried sweet cream, anhydrous milk fat, concentrated milk fat, and the like, and vegetable fats, such as canola oil and the like.

In a preferred form, the intermediate dairy mixture is a cheese base for use in a fat-free or low-fat processed cheese. General and preferred compositions of the intermediate dairy mixture for such a use are shown by the approximate ranges in Table 1 below.

**Table 1:**

| Compositions of Intermediate Dairy Mixture | | | |
|---|---|---|---|
| Ingredient | General | Preferred | More Preferred |
| Milk Protein Concentrate | 5-86% | 10-76% | 15-55% |
| Whey Powder | 5-86% | 10-76% | 15-55% |
| Salt | 4-20% | 4-20% | 5-7% |
| Water | 5-35% | 10-35% | 25-30% |
| Aw | ≤ 0.87 | ≤ 0.81 | ≤ 0,80 |
| Milk Protein Concentrate/ Whey Powder Ratio | 17:1-1:17 | 8:1-1:8 | 4:1-1:4 |
| Water/Salt Ratio | ≤ 6.2 | ≤ 5.0 | ≤ 5.0 |

Of course, the dairy mixture must be non-dusting and friable, microbiologically stable for at least about 5 days at ambient temperatures, and capable of being incorporated into process cheese without being gritty (i.e., a substantially smooth texture). Such compositions form non-dusting, friable mixtures that have water activities of less than 0.87 to render the dairy mixtures stable from microbiological growth for at least 5 days.

Optionally, the intermediate dairy mixture may also include other functional ingredients, such as fats (i.e., dairy or vegetable), starches, hydrocolloids (i.e., gums, maltodextrins, and the like), sugars (i.e., mono-, di-, oligo-, and polysaccharides, and the like), salts (sodium and/or potassium chloride), edible acids, emulsifying salts (i.e., citrates, phosphates, and the like), emulsifiers, preservatives, nutrients (calcium, vitamins, and the like), and other flavors or colors if desired and so long as such additives do not adversely effect the desired properties (e.g., non-dusting and friable nature and microbiologically stability). The other functional ingredients are added depending on the final product to be formed from the intermediate dairy mixture (i.e., cheese, cream cheese, yogurt, and the like). For instance, if the intermediate dairy mixture is to be used as a base to form process cheese, then the intermediate dairy mixture may also include an optional fat source (dairy or vegetable), a preservative, an edible acid, and edible natural or artificial flavors, colors, or other ingredients to impart desired colors, flavors, or textures.

The intermediate dairy mixtures can be prepared using batch, semicontinuous, or continuous manufacturing equipment. One method of manufacturing the intermediate dairy mixture for immediate use in a process cheese involves first forming a pre-mix of the high protein powder, the dairy powder, and the salt (or brine solution) to which appropriate amounts of water or other optional ingredients are then blended in either a mixing tank or continuous mixer. An alternative method of forming the intermediate dairy mixture is to separately add each ingredient to a blending tank or continuous mixer. It will be appreciated by those skilled in the art that similar methods may be employed to use the intermediate dairy mixture in other food products such as cream cheeses, yogurts, and the like.

A preferred method of forming the dairy mixture is through a continuous process using an extruder or other continuous manufacturing equipment. A twinscrew extruder (i.e., Readco Manufacturing, Inc., York, PA) is one type of continuous manufacturing equipment suitable for continuously forming the intermediate dairy mixture. The resultant intermediate dairy mixture, which is non-dusting, friable, and microbiologically stable, produced from the extruder may be immediately used in the manufacture of a dairy product without further processing steps, such as packaging, cooling, grinding, or storage. The high protein powder and dairy powder are combined in the extruder at ambient temperatures such that the resultant dairy mixture is also at ambient temperature; therefore, subsequent cooling steps are eliminated. In addition, the mixture is preferably processed through the extruder with low shear to limit heat generation from mechanical energy. For instance, low shear in the extruder may be obtained using an extruder designed for conveying rather than kneading.

As discussed previously, it is preferred to use the intermediate dairy mixture as a base ingredient in the manufacture of process cheese. For instance, the intermediate dairy mixture may be blended with various amounts of water, fat, other dairy ingredients (e.g., milk, skim milk, buttermilk, anhydrous milk fat, cheese whey, natural cheese, skim milk cheese, or albumin), and conventional process cheese emulsifiers to form a process cheese. The intermediate dairy mixture may also be blended with the above ingredients and various gums (i.e., carob bean gum, gum karaya, gum tragacanth, guar gum, gelatin, sodium carboxymethyl cellulose, carrageenan, oat gum, sodium alginate, propylene glycol alginate, or xanthum gum) to form a processed cheese spread. The cheese is typically prepared in a horizontal cooker, such as a laydown cooker, at temperatures between about 150 and about 250°F.

In one method, for example, the intermediate dairy mixture may be hydrated with water at a temperature from about 35 to about 160°F to form a hydrated dairy mixture. If desired, fat may then be added to the hydrated dairy mixture by blending the fat therein at a temperature of about 90 to about 160°F. If necessary, the pH is adjusted to about 4.8 to about 5.5 by adding various amounts of an edible acid. The hydrated dairy mixture is then mixed or blended with salt under a sufficient shear to form a homogenous, relatively stable emulsion typically referred to as a fresh cheese. Next, flavors, other additives, emulsifiers, and water are added to the fresh cheese, which is then processed in a conventional cooker, such a laydown cooker, at about 150 to about 250°F. As one skilled in the art will appreciate, the addition of various flavors, salts, water, and other additives can be made in various amounts and at various points in the process depending on the desired final product. Furthermore, one skilled in the art will also appreciate that various amounts of flavorants, colorants, emulsifiers, stabilizers, and similar conventional additives may be included depending on the desired result.

The Examples that follow are intended to illustrate, and not to limit, the invention. All percentages used herein are by weight, unless otherwise indicated.

**EXAMPLE 1.** Five inventive intermediate dairy mixtures were formed according to the compositions in Table 2 by blending various combinations of MPC, whey powder, sorbic acid, lactic acid, salt, and water to form the intermediate dairy mixtures. The water activity (Aw) and pH of each intermediate dairy mixture was measured.

Each intermediate dairy mixture was then hydrated and cooked to form a process cheese. Each intermediate dairy mixture was mixed with water, salt, and lactic acid and then subjected to a shear to form a fresh cheese. A process cheese (about 60 percent water) was then prepared by blending flavor, skim milk cheese (about 20 percent), color, sorbic acid, and emulsifiers into the fresh cheese (about 20 percent), which was then cooked in a laydown cooker to form the processed cheese. The resultant cheeses all had a flavor, texture, and meltability similar to conventionally prepared cheese products.

Table 2 also provides details of the results. Each intermediate dairy mixture was non-dusting and friable. The water activities were all below 0.87 such that the mixtures were stable from microbiological growth at ambient temperatures for at least about 5 days. The resultant processed cheeses were evaluated for texture and consistency. Each of the intermediate dairy mixtures formed a process cheese with a smooth texture (indicated by "S" in the table) without any grittiness or visible specks therein.

**Table 2:**

| Ingredient | Inventive Intermediate Dairy Mixtures | | | | |
|---|---|---|---|---|---|
| | Intermediate Dairy Mixture No. | | | | |
| | 3 | 13 | 14 | 15 | 16 |
| MPC | 51.8 | 51.9 | 50.2 | 54.1 | 52.3 |
| Whey powder | 18.7 | 17.3 | 16.8 | 18.1 | 17.5 |
| Sorbic acid | 1.1 | 0 | 0 | 0 | 0 |
| Salt | 5.3 | 5.6 | 5.3 | 5.7 | 5.6 |
| Lactic acid | 0.9 | 0 | 2.7 | 0 | 2.8 |
| Water | 22.2 | 25.2 | 25.0 | 22.1 | 21.8 |

| Mixture Properties | | | | | |
|---|---|---|---|---|---|
| Aw | 0.75 | 0.8 | 0.81 | 0.78 | 0.78 |
| pH | 6.10 | - | - | - | - |
| MPC/Whey Powder | 2.8 | 3.0 | 3.0 | 3.0 | 3.0 |
| Water/Salt | 4.2 | 4.5 | 4.7 | 3.9 | 3.9 |
| Final Product Texture | S | S | S | S | S |

**COMPARATIVE EXAMPLE.** Different comparative intermediate dairy mixtures were formed similar to those of Example 1, but with either no whey powder or decreased levels of salt. The mixtures were formed into a processed cheese similar to Example 1. The resultant intermediate dairy mixtures were unacceptable either because the water activity was above 0.87 rendering the mixture susceptible to microbiological growth or the formed processed cheese had a perceptible grittiness or visible specks therein. (i.e., a listing of "S" or "G" in Table 3 indicates smooth or gritty texture, respectively). While each mixture was friable, mixtures 1, 2, 4, and 10-12 were less desirable because they required slightly greater shear or force to break the mixture apart.

**Table 3:**

| Ingredient | Comparative Intermediate Dairy Mixtures | | | | | | | | | | |
|---|---|---|---|---|---|---|---|---|---|---|---|
| | Intermediate Dairy Mixture No. | | | | | | | | | | |
| | 1 | 2 | 4 | 5 | 6 | 7 | 8 | 9 | 10 | 11 | 12 |
| MPC | 33.8 | 33.8 | 51.2 | 75.9 | 40.0 | 63.4 | 41.6 | 60.3 | 36.8 | 47.8 | 47.3 |
| Whey powder | 12.2 | 12.2 | 0.0 | 0.0 | 18.1 | 0 | 19.3 | 0.0 | 12.3 | 0 | 0 |
| Sorbic acid | 0.7 | 0.7 | 1.3 | 2.7 | 1.0 | 2.0 | 1.1 | 1.8 | 0.7 | 1.2 | 1.1 |
| Salt | 3.5 | 3.5 | 0.0 | 0 | 5.2 | 0 | 0 | 0 | 0 | 0 | 0 |
| Lactic acid | 1.8 | 1.8 | 0.0 | 0 | 0 | 0 | 2.8 | 2.8 | 1.8 | 1.8 | 2.9 |
| Water | 48.0 | 48.0 | 47.5 | 21.4 | 35.7 | 34.6 | 35.2 | 35.1 | 48.4 | 49.2 | 48.7 |

| Mixture Properties | | | | | | | | | | | |
|---|---|---|---|---|---|---|---|---|---|---|---|
| Aw | 0.91 | 0.91 | 0.98 | 0.93 | 0.89 | 0.98 | 0.96 | 0.96 | 0.97 | 0.98 | 0.98 |
| pH | - | 5.22 | 5.91 | 6.54 | 4.92 | 6.0 | 5.26 | 5.25 | 5.12 | 5.25 | 4.92 |
| MPC/Whey Powder | 2.7 | 2.7 | - | - | 2.2 | - | 2.2 | - | 3.0 | - | - |
| Water/Salt | 13.7 | 13.7 | - | - | 6.9 | - | - | - | - | - | - |
| Final Product Texture | S | S | G | G | S | G | S | G | S | G | G |

Although the samples containing both MPC and whey protein did produce process cheeses with the desired smooth texture, the water/salt ratio were too high to achieve the desired water activities and, thus, the desired degree of microbiological stability.

EXAMPLE 2. The moisture content of intermediate dairy mixture no. 13 from Example 1 above was varied to evaluate the water activity with varying levels of moisture. As indicated in Table 4 below, moisture contents between 24 and 34 in the dry formula (i.e., all ingredients except water) of mixture no. 13 still resulted in water activities below 0.87.

**Table 4:**

| Moisture Content Variations of Mixture 13 | | | | |
|---|---|---|---|---|
| Parts Dry Mix | Parts Water | Total Moisture Content | Water/Salt | Aw |
| 78.9 | 21.1 | 24.0 | 3.57 | 0.76 |
| 76.9 | 23.1 | 26.0 | 4.02 | 0.78 |
| 74.8 | 25.2 | 28.0 | 4.50 | 0.80 |
| 72.6 | 27.4 | 30.0 | 5.04 | 0.81 |
| 70.6 | 29.4 | 32.0 | 5.55 | 0.83 |
| 68.5 | 31.5 | 34.0 | 6.14 | 0.86 |

It will be understood that various changes in the details, materials, and arrangements of formulations and ingredients, which have been herein described and illustrated in order to explain the nature of the invention may be made by those skilled in the art within the principle and scope of the invention as expressed in the appended claims.

## Claims

1. A solid dairy mixture comprising:
(1) about 5 to about 86 percent of a protein powder having greater than about 40 percent protein;
(2) about 5 to about 86 percent of dairy powder having at least about 70 percent lactose;
(3) about 5 to about 35 percent water; and
(4) about 4 to about 20 percent salt,
wherein the ratio of protein powder to dairy powder in the solid dairy mixture is in the range of about 17:1 to about 1:17, wherein the ratio of water to salt in the solid dairy mixture is less than about 6.2, wherein the solid dairy mixture has a water activity less than about 0.87, wherein the solid dairy mixture is non-dusting and friable; wherein the solid dairy mixture is stable from microbiological growth at room temperature for greater than about 5 days, and wherein the solid dairy mixture can be used to prepare a dairy product having a substantially smooth texture.

2. The solid dairy mixture of claim 1, wherein the protein powder is selected from the group consisting of non fat dry milk, milk protein concentrate, milk protein isolate, whey protein concentrate, whey protein, and mixtures thereof.

3. The solid dairy mixture of Claim 1 or 2, wherein the protein powder is milk protein concentrate.

4. The solid dairy mixture of any one of Claims 1 to 3, wherein the dairy powder is whey powder.

5. The solid dairy mixture of any one of Claims 1 to 4, wherein ratio of protein powder to dairy powder in the solid dairy mixture is in the range of about 4:1 to about 1:4, wherein the ratio of water to salt in the solid dairy mixture is less than about 5.0, and wherein the solid dairy mixture has a water activity less than about 0.80.

6. The solid dairy mixture of any one of Claims 1 to 5, further comprising a dairy or vegetable fat source.

7. The solid dairy mixture of Claim 6, herein the solid dairy mixture contains about 10 to about 40 percent of the dairy or vegetable fat source.

8. A method for preparing a solid dairy mixture, the method comprising:
(1) combining about 5 to about 86 percent of a protein powder having greater than about 40 percent protein, about 5 to about 86 percent of dairy powder having at least about 70 percent lactose, about 5 to about 35 percent water, and 4 to about 20 percent salt at ambient temperatures to form a mixture; and
(2) blending the mixture at ambient temperatures and for a time sufficient to form the solid dairy mixture;
wherein the ratio of protein powder to dairy powder in the solid dairy mixture is in the range of about 17:1 to about 1:17, wherein the ratio of water to salt in the solid dairy mixture is less than about 6.2, wherein the solid dairy mixture has a water activity less than about 0.87, wherein the solid dairy mixture is non-dusting and friable; and wherein the solid dairy mixture can be used to prepare a dairy product having a substantially smooth texture.

9. The method of Claim 8, wherein the protein powder, the dairy powder, and the salt are blended together to form a pre-blend; and wherein the water is added to the pre-blend to form the mixture.

10. The method of Claim 8 or 9, wherein the protein powder is selected from the group consisting of non fat dry milk, milk protein concentrate, milk protein isolate, whey protein concentrate, whey protein, and mixtures thereof.

11. The method of any one of Claims 8 to 10, wherein the protein powder is milk protein concentrate.

12. The method of any one of Claims 8 to 11, wherein the dairy powder is whey powder.

13. The method of any one of Claims 8 to 12, wherein the ratio of protein powder to dairy powder is about 4:1 to about 1:4.

14. The method of any one of Claims 8 to 13, wherein the blending is essentially continuous and is effected in an extruder.

15. The method of any one of Claims 8 to 14, wherein the extruder provides minimal heat generation to the solid dairy mixture from mechanical energy.

16. A solid dairy mixture prepared by a method comprising:
(1) combining about 5 to about 86 percent of a protein powder having greater than about 40 percent protein, about 5 to about 86 percent of dairy powder having at least about 70 percent lactose, about 10 to about 35 percent water, and 4 to about 20 percent salt at ambient temperatures to form a mixture; and
(2) blending the mixture at ambient temperatures and for a time sufficient to form the solid dairy mixture;
wherein the ratio of protein powder to dairy powder in the solid dairy mixture is in the range of about 17:1 to about 1:17, wherein the ratio of water to salt in the solid dairy mixture is less than about 6.2, wherein the solid dairy mixture has a water activity less than about 0.87, wherein the solid dairy mixture is non-dusting and friable; wherein the solid dairy mixture can be used to prepare a dairy product having a substantially smooth texture.

17. A method of preparing a process cheese comprising:
(1) forming a solid dairy base by
(a) combining about 5 to about 86 percent of a protein powder having greater than about 40 percent protein, about 5 to about 86 percent of a dairy powder having at least about 70 percent lactose, about 5 to about 35 percent water, and 4 to about 20 percent salt at ambient temperatures to form a mixture; and
(b) blending the mixture at ambient temperatures and for a time sufficient to form the solid dairy base; wherein the ratio of protein powder to dairy powder in the solid dairy base is in the range of about 17:1 to about 1:17, wherein the ratio of water to salt in the solid dairy base is less than about 6.2, wherein the solid dairy base is non-dusting and friable; and wherein the solid dairy base has a water activity less than about 0.87; and
(2) processing the solid dairy base into a process cheese having a substantially smooth texture by
(1) hydrating the solid dairy base to form a hydrated dairy mixture;
(2) treating the hydrated dairy mixture with shear to form a fresh cheese; and
(3) blending emulsifiers with the fresh cheese at a time and temperature sufficient to obtain the process cheese.
